# EUROPÄISCHE PATENTANMELDUNG

(11) **EP 3 260 190 A1**
(43) Veröffentlichungstag der Anmeldung: **27.12.2017**
(21) Anmeldenummer: 16175356.1
(22) Anmeldetag: 20.06.2016
(51) Int. Cl.: B01D 61/14, B01D 65/02, B01D 65/08

(54) **VERFAHREN ZUR REINIGUNG VON MEMBRANFILTERN**

(71) Anmelder: GTS Green Technology Solutions GmbH, 20149 Hamburg (DE)
(72) Erfinder: WERMTER, Carsten, 20149 Hamburg (DE)
(74) Vertreter: Stürken, Joachim

(57) **Zusammenfassung**

Die Erfindung betrifft ein Verfahren zur Rückspülung einer druckgetriebenen Membranfiltereinheit (3) als Komponente eines Membranfiltersystems, umfassend
- eine Membranfiltereinheit (3),
- eine Rohrleitung zur Einspeisung (R1) einer zu filtrierenden Rohflüssigkeit in das System,
- eine Spülleitung (R3) zur Abführung einer mit Retentat angereicherten Spülflüssigkeit aus der Membranfiltereinheit (3) mit einem Spülventil (7), welches zwischen einem Spülabgang der Membranfiltereinheit (3) und einer Einrichtung zur Aufnahme oder Weiterleitung der Spülflüssigkeit (8) angeordnet ist,
- eine Rohrleitung zum Transport einer gereinigten, filtrierten Flüssigkeit (R2) von der Membranfiltereinheit (3) zu einer Entnahmestelle (6) mit einem Rückflussverhinderer oder Systemtrenner (5), welcher zwischen einem Ausgang der Membranfiltereinheit (3) und der Entnahmestelle (6) angeordnet ist, und
- ein Membranausgleichsgefäß (4), welches in der Rohrleitung zum Transport einer gereinigten, filtrierten Flüssigkeit (R2) zwischen der Membranfiltereinheit (3) und dem Rückflussverhinderer oder Systemtrenner (5) angeordnet ist,
wobei die Rückspülung oder Rückwärtsspülung der Membranfiltereinheit (3) erfolgt, indem das Ventil 2 geschlossen, der Rückflussverhinderer oder Systemtrenner (5) aktiviert und das Spülventil (7) geöffnet werden, sodass ein im Membranausgleichsgefäß (4) unter Druck bereitgestelltes Volumen einer bereits durch die Membranfiltereinheit (3) gereinigten, filtrierten Flüssigkeit in einer Strömungsrichtung (RS) durch die Membranfiltereinheit (3) in die Spülleitung (R3) geleitet wird. Ferner betrifft die Erfindung ein Membranfiltersystem, welches zur Durchführung des Verfahrens geeignet ist.

## Beschreibung

### Einleitung

Die Erfindung betrifft allgemein das Gebiet der Wasseraufbereitung. Insbesondere betrifft die Erfindung ein Verfahren zur Reinigung druckgetriebener Membranfilter oder Membranfilteranlagen wie solche, die als Mikro-, Ultra-, Nano- und/oder Umkehrosmoseanlagen ausgestaltet sind und zur Aufbereitung von Flüssigkeiten wie insbesondere Wasser für den menschlichen Gebrauch (Duschen, Waschen, Trinken) eingesetzt werden. Ferner betrifft die Erfindung ein Filtersystem, dessen Ausgestaltung für die wirksame Durchführung des Reinigungsverfahrens geeignet ist.

### Stand der Technik und Nachteile

Einleitend sei angemerkt, dass sich die nachfolgenden Erläuterungen beispielhaft auf die Aufbereitung wässriger Flüssigkeiten wie insbesondere Wasser beziehen, grundsätzlich aber auch für andere Flüssigkeiten Gültigkeit besitzen.

Das für Betriebs-, Sanitär- und Trinkzwecke für den menschlichen Gebrauch vorgesehene Wasser unterliegt strengen Hygieneanforderungen, deren Einhaltung durch eine Vielzahl von Vorschriften geregelt und überwacht wird. Bei Verstoß gegen diese Vorschriften drohen, neben den gesundheitlichen Risiken für die Betroffenen, empfindliche Konsequenzen für die Verantwortlichen. Aus diesen Gründen müssen Vorkehrungen getroffen werden, um jederzeit eine ausreichend hohe Qualität des für den menschlichen Gebrauch vorgesehenen Wassers zu gewährleisten.

Im Wesentlichen bestehen zwei Wege, über welche Wasser, selbst wenn es zunächst in einwandfreier Form in ein Leitungssystem eingespeist wird, verunreinigt werden kann. Zum Einen können in diesem Leitungssystem unerwünschte Bestandteile wie insbesondere Mikroorganismen vorhanden sein, welche mit dem Wasser in Kontakt kommen und es somit verunreinigen. Typische Quellen können insbesondere die Wandungen der Rohrleitungen, aber auch Dichtungen, Pumpen, Ventile und dergleichen sein. Zum Anderen können sich im Rohrsystem, ausgehend von wenigen Keimen, die mit einer Flüssigkeit in das System eingespeist werden, unter günstigen Bedingungen zahlreiche Kolonien von Mikroorganismen entwickeln, welche sich im System frei schwimmend oder an einer Oberfläche fixiert als so genannte Biofilme manifestieren. Beispielhaft für Mikroorganismen seien hier Legionellen genannt, welche zu ernsthaften gesundheitlichen Problemen führen. Derartige Mikroorganismen können beispielsweise über die Nahrung aufgenommen werden. Speziell für Legionellen wird als Hauptinfektionsweg jedoch das Einatmen erregerhaltiger, lungengängiger Aerosole aus dem Warmwasserbereich angesehen. Somit stellen auch Duschen oder an der Entnahmestelle (z.B. Wasserhahn) entstehende Aerosole Gefahrenquellen dar. Dabei ist bekannt, dass sich solche Mikroorganismen ganz vorwiegend nur bei Stagnation, also in stehendem Wasser, oder aber auch innerhalb von zumindest vorübergehend geschlossenen Zirkulationsleitungssystemen vermehren, wohingegen sie in dauerhaft fließenden Rohrleitungen eines vergleichsweise offenen Systems nicht zum Problem werden. Da in der großtechnischen Wasseraufbereitung ein ständiges Strömen des Wasser der Normalfall ist, fokussiert sich die Erfindung insbesondere auf das Gebiet der entnahmenahen Rohrleitungssysteme, wie sie beispielsweise in Krankenhäusern, Schwimmbädern, Schulen, Turnhallen, Fitnesscentern, Hotels, Jugend- und Altenheimen aber auch in Ein- und Mehrfamilienhäusern anzutreffen sind.

Zur Entfernung von Partikeln bestimmter Größe können entsprechend fein ausgestaltete Filter eingesetzt werden. Besonders vorteilhaft sind so genannte Mikro- und Ultrafiltrationssysteme (MF/UF-Systeme). Bei diesen strömt das verunreinigte Wasser beispielsweise durch eine Vielzahl dünner Kapillaren, auch Membrane genannt, die seitliche Filteröffnungen bzw. Filterporen definierter Größe aufweisen. Durch diese Öffnungen tritt nur das gereinigte Wasser aus, wohingegen das mit Verunreinigungen immer weiter angereicherte Wasser am Ende der Kapillare periodisch oder kontinuierlich einem Entsorgungsabfluss zugeführt wird. Das gereinigte Wasser aus den in einer Vielzahl vorhandenen Kapillaren wird hingegen zentral in einem Druckrohr gesammelt und steht am Ausgang des Filters zur Verfügung. Dort kann es an einer Zapfstelle entnommen oder in ein Rohrsystem für filtriertes, sauberes Wasser eingeleitet werden. Mikro- und Ultrafiltrationssysteme sind sowohl zum Entfernen von Mikroorganismen als auch anderer Schweb- und Trübstoffe geeignet und bekannt.

Die Verwendung von MF/UF-Systemen hat sich jedoch in solchen Situationen als problematisch erwiesen, in denen das für den menschlichen Gebrauch vorgesehene und mittels Filtration gereinigte Wasser dem Leitungssystem nicht unmittelbar entnommen wird, also zumindest vorübergehend nicht strömt. Wie bereits erwähnt, können sich in zirkulierendem oder stehendem kalten oder nicht ausreichend heißem Wasser Mikroorganismen vermehren und im Zeitverlauf derartig akkumulieren, dass gesundheitsgefährdende Konzentrationen erreicht werden.

Während dies für das noch in den Kapillaren befindliche Wasser unerheblich ist, führt eine Wiederbesiedelung des stromabwärts der Filtereinrichtung befindlichen Flüssigkeitsvolumens im Zeitraum seines Stillstandes zu einer Rekontamination, die unbedingt zu vermeiden ist. Durch die typischerweise sehr große Oberfläche derartiger Filtersysteme können katalytische Verkeimungen mit extrem hohen Grenzwertüberschreitungen auftreten. Zur Vermeidung dieses Problems, aber auch zur Beseitigung von zurückgehaltenen Feststoffen oder Partikeln, die sich als Retentat im Filtermedium (z.B. spirale, tubuläre oder Hohlfasermembranfilter) angesammelt und/oder in dessen Poren festgesetzt haben, werden die Filtersysteme regelmäßig mit chemischer Reinigungsflüssigkeit gespült und/oder zerlegt und mechanisch gesäubert. Beide Methoden sind nachteilig, da im einen Fall wiederum gesundheitsschädliche Substanzen ins Rohrsystem eingebracht werden, und im anderen Fall mit entsprechenden Ausfallzeiten zu rechnen ist.

Alternativ oder zusätzlich werden derartige Filtersysteme mit unfiltriertem Rohwasser oder mit bereits filtriertem Wasser (Permeat) gespült, wobei vorliegend grundsätzlich zwischen einer Vorwärtsspülung, d.h. einer Spülung in der üblicherweise zum Filtrieren vorherrschen Strömungsrichtung, und einer Rückwärtsspülung unter Umkehr der Strömungsrichtung unterschieden wird.

Sowohl bei der Vorwärts- als auch bei der Rückwärtsspülung werden die im Filtersystem zurückgehaltenen Feststoffe und Partikel einschließlich etwaig vorhandene Keime über einen Spülabgang aus dem System entfernt und über eine Spülleitung entsorgt oder aufbereitet. Diese Spülungen werden gewöhnlich periodisch aber auch nach Bedarf wie z.B. bei Erreichen eines vorher festgelegten Wertes der Trübung, bei Unterschreitung eines Mindestdurchflusses, oder bei einem erhöhten Druckabfall über den Filtermembranen durchgeführt.

Insbesondere im Zusammenhang mit dem Betrieb von Membranfilteranlagen zur Aufbereitung von Wasser für den menschlichen Gebrauch sowie von Flüssigkeiten zur Herstellung von Medikamenten und Lebensmitteln ist die Einhaltung gesetzlicher, empfohlener oder akzeptabler Werte für Mikroorganismen von großer Bedeutung, weshalb eine Rückwärtsspülung unter Verwendung einer bereits gereinigten, filtrierten Flüssigkeit wie z.B. Wasser aus einem stromabwärts der Filtereinheit gelegenen Bereich des Systems eine besondere Aufmerksamkeit erfordert, da dort befindliche Keime eine (Re)Kontamination des Filtermediums hervorrufen können.

Bei der Spülung derart sensibler Anlagen werden daher gewöhnlich mindestens zwei Filtereinheiten sequenziell angeordnet und beim Rückwärtsspülen derart geschaltet, dass immer nur eine Filtereinheit je Rückspülvorgang gespült wird, wobei dieses Rückwärtsspülen mit der filtrierten Flüssigkeit (Permeat) der anderen Filtereinheit durchgeführt wird. Nachteilig an dieser Vorgehensweise ist, dass mindestens zwei Filtereinheiten verwendet werden müssen und die Verschaltung der beteiligten Einheiten aufwendig ist.

### Aufgabe der Erfindung und Lösung

Die Aufgabe der vorliegenden Erfindung liegt daher in der Bereitstellung eines alternativen Verfahrens zur Rückwärtsspülung (Rückspülung) von Membranfilteranlagen oder - einheiten, mit dem sich die vorgenannten Probleme wie insbesondere eine (erneute) Verkeimung des Filtermediums durch (Wieder)Besiedelung von dessen Oberflächen mit Mikroorganismen auf vergleichsweise einfache und kostengünstige Weise lösen lassen. Insbesondere soll das erfindungsgemäße Verfahren geeignet sein, eine einzige vorhandene Membranfiltereinheit wirksam von Verunreinigungen wie insbesondere von Feststoffen, Partikeln und Mikroorganismen zu befreien, ohne dass es hierzu einer weiteren Membranfiltereinheit zur Bereitstellung einer gereinigten Flüssigkeit für den Rückspülvorgang bedarf.

Ein weiterer Aspekt der Erfindung betrifft die Bereitstellung eines zur Durchführung des erfindungsgemäßen Verfahrens geeigneten Filtersystems.

Die Aufgabe wird durch Bereitstellung des Verfahrens gemäß Hauptanspruch sowie durch Bereitstellung des Membranfiltersystems gemäß Anspruch 4 gelöst. Vorteilhafte und daher bevorzugte Ausführungsformen sind Gegenstand entsprechender Unteransprüche und werden in der nachfolgenden Beschreibung dargelegt sowie in den Figuren veranschaulicht.

### Beschreibung

Das erfindungsgemäße Verfahren zur Rückspülung oder Rückwärtsspülung einer druckgetriebenen Membranfiltereinheit, die nach einer bevorzugten Ausführungsform als Mikro-, Ultra-, Nano- und/oder Umkehrosmoseeinheit ausgestaltet ist und insbesondere zur Beseitigung von Mikroorganismen (Bakterien, Sporen, Viren) aus Flüssigkeiten wie insbesondere von Wasser für den menschlichen Gebrauch (Waschen, Duschen, Trinken) oder aus Flüssigkeiten im Rahmen der Herstellung oder Zubereitung von Arznei- oder Lebensmitteln eingesetzt wird, setzt das Vorhandensein eines Membranfiltersystem voraus, welches neben der eigentlichen Membranfiltereinheit (Cross-Flow oder Dead-End) folgende Komponenten aufweist:
- Eine Rohrleitung zur Einspeisung einer Rohflüssigkeit wie z.B. Rohwasser in die Membranfiltereinheit mit einem elektrisch betätigbaren Ventil zwischen einer Einspeisestelle und der Membranfiltereinheit;
- Eine Spülleitung zur Abführung einer aus der Membranfiltereinheit austretenden Spülflüssigkeit mit einem elektrisch betätigbaren Ventil zwischen einem Spülabgang der Membranfiltereinheit und einer Einrichtung zur Aufnahme oder Weiterleitung der Spülflüssigkeit (mit Retentat);
- Eine Rohrleitung zum Transport einer gereinigten, filtrierten Flüssigkeit (Permeat) zu einer Entnahmestelle mit einem Rückflussverhinderer oder Systemtrenner zwischen dem Ausgang der Membranfiltereinheit und der Entnahmestelle;
- Ein Membranausgleichsgefäß, das in der Rohrleitung zum Transport des Permeats hinsichtlich der üblicherweise beim Filtrieren vorherrschenden Strömungsrichtung stromabwärts der Membranfiltereinheit und stromaufwärts des Rückflussverhinderers oder Systemtrenners, d.h. zwischen der Membranfiltereinheit und dem Rückflussverhinderer oder Systemtrenner angeordnet ist.

Nach einer bevorzugten Ausführungsform umfasst das Filtersystem ferner eine weitere Rohrleitung zur Verbindung der Rohrleitung zur Einspeisung einer Flüssigkeit mit der Spülleitung zur Abführung der Spülflüssigkeit, in deren Verlauf ein elektrisch betätigbares Ventil angeordnet ist. Unter Berücksichtigung der bei einer Einspeisung und einer Spülung in den beiden dafür vorgesehenen Leitungen jeweils vorherrschen Strömungsrichtung ist die Verbindungsleitung jeweils stromabwärts der vorgesehenen Ventile mit den beiden Leitungen verbunden.

Unter Verwendung eines derartigen Filtersystems erfolgt die Rückspülung (Rückwärtsspülung) mit einer Flüssigkeit, welche die Membranfiltereinheit bereits durchlaufen hat und als Permeat im Membranausgleichsgefäß bereitgestellt wird. Dieser Rückspülvorgang wird eingeleitet, indem das Ventil in der Einspeisungsleitung sowie ggf. die Entnahmestelle geschlossen und das Ventil in der Spülleitung geöffnet werden. Der in dem Membranausgleichsgefäß vorherrschende Überdruck führt dazu, das das in ihm befindliche Flüssigkeitsvolumen als Rückspülflüssigkeit entgegen der gewöhnlich beim Filtrieren vorherrschenden Strömungsrichtung durch die Membranfiltereinheit in die Spülleitung gedrückt wird, wodurch in der Filtereinheit befindliche und dort zurückgehaltene Partikel und Feststoffe wie insbesondere auch etwaig vorhandene Mikroorganismen als Retentat wirksam aus der Filtereinheit beseitigt werden. Der zwischen dem Membranausgleichsgefäß und der Entnahmestelle angeordnete Rückflussverhinderer oder Systemtrenner sorgt dafür, dass etwaig mit Keimen belastete Flüssigkeit aus dem Leitungsabschnitt zwischen dem Rückflussverhinderer oder Systemtrenner und der Entnahmestelle oder aus der Entnahmestelle (z.B. Wasserhahn) selber vom Rückspülflüssigkeitsvolumen ausgeschlossen wird und somit nicht in die Membranfiltereinheit gelangen kann.

Sofern das Verfahren unter Verwendung einer bevorzugten Ausführungsform des Filtersystems mit einer Verbindungsleitung zwischen der Einspeisungsleitung und der Spülleitung durchgeführt wird (s.o.), wird entweder das Ventil in der Spülleitung oder das Ventil in der Verbindungsleitung geöffnet, während das jeweils andere Ventil geschlossen wird. Alternativ werden beim Rückspülvorgang sowohl das Ventil in der Spülleitung als auch das Ventil in der Verbindungsleitung geöffnet.

Nach einer weiteren bevorzugten Ausführungsform umfasst das erfindungsgemäße Filtersystem ferner ein Fördermittel wie z.B. eine Pumpe, welche im Verlauf der Einspeisungsleitung bevorzugt zwischen dem Ventil und der Membranfiltereinheit angeordnet ist.

Als Mikroorganismen kommen insbesondere organische pathogene Feststoffe wie Viren, Bakterien, Pilze und Pilzsporen, sowie Bestandteile derselben in Betracht.

Ultrafiltrationseinheiten als Beispiel einer erfindungsgemäß verwendeten Membranfiltereinheit sind hinlänglich aus dem Stand der Technik bekannt. Ihre Wirkungsweise beruht auf einer perforierten Membran, deren Poren nur Partikel bis zu einer bestimmten Größe passieren lassen. Größere Partikel werden von der Membran als Retentat zurückgehalten. UF-Einheiten sind demnach den Oberflächenfiltern zuzurechnen, im Gegensatz zu Tiefenfiltern, wie beispielsweise Sand- oder Kiesfiltern. Eine bevorzugte Bauform einer UF-Einheit ist der Aufbau in einer Säule. Das Rohwasser wird der UF-Einheit über einen gemeinsamen Eingangsbereich zugeführt. Dieser verzweigt in die Innenräume einer Vielzahl dünner Röhren oder Hohlfasern mit einem typischen Innendurchmesser von lediglich 0,7 bis 2 mm, bevorzugt 1,5 mm, sowie einem typischen Außendurchmesser von ca. 6,0 mm. Sie weisen in ihren Wandungen besagte Poren auf, durch die das auch Filtrat oder Permeat genannte, gereinigte, also aufbereitete Wasser in einen Entnahmeraum abfließt. In diesem Entnahmeraum wird das Permeat zusammengeführt und verlässt die UF-Einheit durch einen gemeinsamen Ausgangsbereich. Das je nach Anwendungsfall auszuwählende Filtermedium zeichnet sich dabei durch eine hohe Chemikalienbeständigkeit aus. Im Falle der Trinkwasseraufbereitung wird bevorzugt Polyethersulfon (kurz: PESU oder PES) als Material ausgewählt.

Bei der so genannten "Dead-End"-Technik wird das gesamte Rohwasser in Permeat umgesetzt. Nach und nach sammeln sich jedoch immer mehr zurückgehaltene Partikel im Inneren der Filterröhren an. Um ein Zusammenbacken der Partikel und ein Verstopfen der Poren zu verhindern oder zumindest zu verringern, ist es vorteilhaft, wenn der relative Druckunterschied beiderseits der Membran gering ist. Als vorteilhaft hat sich ein Wert von weniger als 2 bar, beispielsweise 0,3 bar, erwiesen. Ein größerer Druckunterschied erbringt zwar theoretisch eine höhere Separationsrate, birgt jedoch auch ein höheres Risiko des Verstopfens der Poren, und benötigt deutlich mehr Energie.

Im Gegensatz dazu streicht bei der so genannten "Cross-Flow"-Technik laufend belastete Flüssigkeit an der einen Seite des Filters entlang, von der immer nur ein Teil der Flüssigkeit durch die Poren auf die Rein-Seite gelangt. Die übrige, leicht angereicherte Flüssigkeit kann dann zirkuliert und erneut am Filter entlanggeführt werden. Zwar tritt hier das Problem des Zusammenbackens nicht auf, nachteilig ist jedoch die geringe Separationsgeschwindigkeit bzw. die große Menge an umzuwälzendem belasteten Fluid.

Um die dauerhafte Betriebsfähigkeit des Filters zu gewährleisten, muss dieser periodisch regeneriert, also gereinigt bzw. entleert werden, wobei im Rahmen der vorliegenden Erfindung zwischen einer Vorwärtsspülung unter Beibehaltung der bei der gewöhnlichen Filtration vorherrschenden Strömungsrichtung und einer Rückwärts- oder Rückspülung unter Umkehr der vorgenannten Strömungsrichtung unterschieden wird und der erfinderische Beitrag den letztgenannten Spülvorgang betrifft. Dazu weist die Membranfiltereinheit häufig an demjenigen Ende der Säule, welches dem Eingangsbereich gegenüber liegt, einen Spülbereich auf, welcher in analoger Weise mit den allerdings gegenüberliegenden Enden der Innenräume der Röhren oder Hohlfasermembranen verbunden ist. Wird dieser Spülbereich geöffnet, strömt zumindest ein Teil der Flüssigkeit nicht durch die Poren, sondern spült das Partikelkonzentrat (Retentat) aus den Röhren in den Spülbereich, von wo aus es über einen Ablauf einer Entsorgung zugeführt werden kann. Je nach Anwendungsfall kann der Spülbereich temporär oder dauerhaft geöffnet sein, so dass nur ein bestimmter Prozentsatz des Rohwassers in Permeat umgesetzt wird. Dementsprechend wechseln sich hier ggf. Dead-End- und Cross-Flow-Technik einander ab. Erfindungsgemäß erfolgt der Rückwärts- oder Rückspülvorgang unter Umkehr der beim gewöhnlichen Filtrieren vorherrschenden Strömungsrichtung.

Vorteilhaft an der MF/UF-Technologie ist der im Verhältnis zu Technologien wie der Reinigung mittels UV-Licht oder durch Erhitzung deutlich geringere Energieverbrauch. Mittels UF-Technologie kann Wasser rein mechanisch keimfrei gemacht werden. Durch entsprechend feine Poren können eingeschränkt sogar Medikamentenrückstände oder Schwermetalle aus dem Rohwasser entfernt werden, wobei dann korrekterweise eher von "Nanofiltration" gesprochen wird. Die UF-Technologie ist somit in der Lage, die hohen Anforderungen, die sich gerade im Hinblick auf die überarbeitete deutsche Trinkwasserverordnung ergeben, zu erfüllen und zu übertreffen, gemäß derer gerade auch der Einsatz von UF-Systemen zur Aufbereitung von Wasser für den menschlichen Gebrauch statthaft ist (vgl. "Liste der Aufbereitungsstoffe und Desinfektionsverfahren gemäß § 11 Trinkwasserverordnung 2001", Stand 2010).

Im Rahmen einer weiteren bevorzugten Ausführungsform ist ferner vorgesehen, dass das erfindungsgemäße Membranfiltersystem mindestens eine Sicherung gegen Beschädigung oder Zerstörung der Filtrationseinheit umfasst. Druckstöße aufgrund schnell anlaufender Pumpen oder zu schnell schließender Magnetventile können zu sehr schnellen Druckanstiegen im System führen, wodurch die meist dünnwandigen Hohlfasermembranen beschädigt werden können. Auch scharfkantige Partikel wie beispielsweise Metallspäne, die mit dem Rohwasser mitschwimmen, können das Innere der MF/UF-Einheit beschädigen. Gegen Druckspitzen sind bevorzugt Vorrichtungen zur schnellen Druckentlastung wie z.B. Sicherheitsventile vorzusehen, welche bevorzugt vor der Filtereinheit angeordnet sind. Scharfkantige Partikel können durch entsprechend unempfindliche Grobfilter stromaufwärts der Filtereinheit aus dem Rohwasser herausgefiltert werden.

Nach einer weiteren Ausführungsform umfasst das System ferner Vorrichtungen, die aus der Gruppe bestehend aus Biosensoren, Trübungssensoren, Strömungssensoren, Drucksensoren, Sandfiltern, UV-Desinfektionseinheiten, Hitzebehandlungseinheiten, Beprobungsstellen, und Probenentnahmestellen ausgewählt sind.

Dabei umfasst das System vorzugsweise ferner einen Strömungs- und/oder Drucksensor zur Erfassung des Strömungszustands, und/oder einen Sensor zur Erfassung der Trübung und/oder Belastung der Flüssigkeit mit Mikroorganismen.

### Figurenbeschreibung

- Figur 1: zeigt ein erfindungsgemäßes Membranfiltersystem.
- Figur 2: zeigt eine bevorzugte Ausführungsform des erfindungsgemäßen System.
- Figur 3: zeigt eine Erweiterung der in Figur 2 dargestellten Ausführungsform des erfindungsgemäßen Membranfiltersystems.
- Figur 4: zeigt eine schematische Darstellung einer üblichen Membranfiltereinheit, welche zur Durchführung des erfindungsgemäßen Verfahrens geeignet ist.

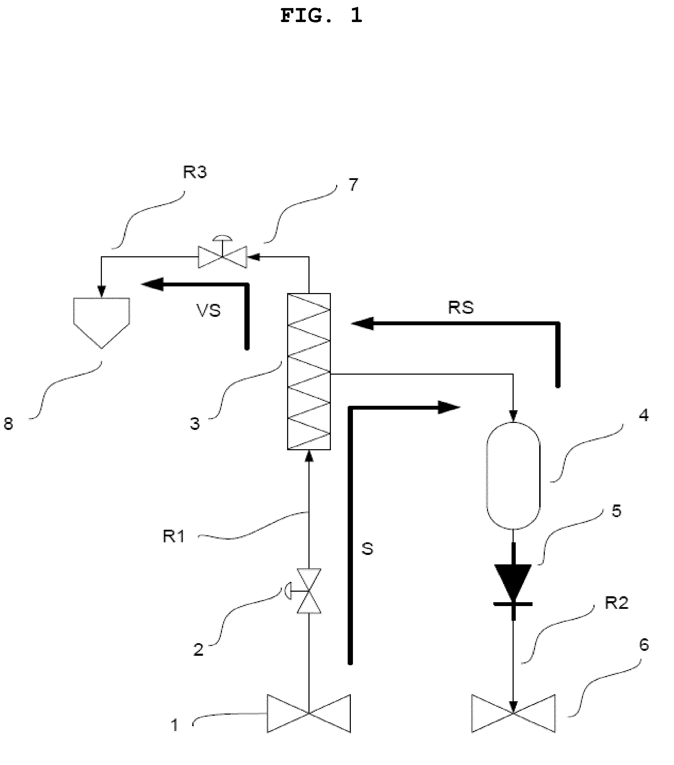

In der **Figur 1** ist ein Leitungssystem dargestellt, wie es erfindungsgemäß eingesetzt wird. Durch eine Einspeisestelle 1 kann Flüssigkeit wie beispielsweise Wasser in die Einspeisungsrohrleitung R1 des Systems eingeleitet werden. Durch Öffnen eines elektrisch betätigbaren Ventils 2 fließt die Flüssigkeit in Strömungsrichtung S und passiert eine Membranfiltereinheit 3 zur mechanischen Abtrennung von insbesondere Mikroorganismen, sodass an einer Entnahmestelle 6, welche sich stromabwärts der Einspeisestelle 3 und der Membranfiltereinheit 3 befindet und mit der Membranfiltereinheit 3 über eine Permeatrohrleitung R2 verbunden ist, gereinigte Flüssigkeit entnommen oder in ein stromabwärts gelegenen Rohrleitungsabschnitt eingeleitet werden kann.

Beim Vorwärtsspülen wird ein Ventil 7 in der Spülleitung R3 geöffnet, sodass das Retentat aus der Membranfiltereinheit 3 zusammen mit der Spülflüssigkeit in Strömungsrichtung VS zum Abfluss 8 fließt.

Bei der erfindungsgemäßen Rück- oder Rückwärtsspülung dient das Ventil 2 dem Verschließen der Einspeisungsrohrleitung R1. Weiterhin ist ein Rückflussverhinderer oder Systemtrenner 5 in der Permeatrohrleitung R2 vorgesehen, um einen Rückfluss eines stromabwärts befindlichen Flüssigkeitsvolumens zu unterbinden oder eine Trennung herbeizuführen. In der Permeatrohrleitung R2 ist ferner ein mit einem Überdruck beaufschlagbares Membranausgleichsgefäß 4 vorgesehen, welches zwischen der Membranfiltereinheit 3 und dem Rückflussverhinderer oder Systemtrenner 5 angeordnet ist. Beim gewöhnlichen Betrieb befindet sich in dem Membranausgleichsgefäß 4 stets ein gewisses Volumen an bereits durch die Membranfiltereinheit 3 gereinigter Flüssigkeit (Permeat), mit welchem der Rückspülvorgang durchgeführt wird. Der Vordruck in dem Membranausgleichsgefäß 4 führt dazu, dass das in ihm befindliche Flüssigkeitsvolumen entgegen der beim gewöhnlichen Filtrieren vorherrschenden Strömungsrichtung S und somit in Strömungsrichtung RS durch die Membranfiltereinheit 3 in die Spülleitung R3 in Richtung Abfluss 8 gedrückt wird.

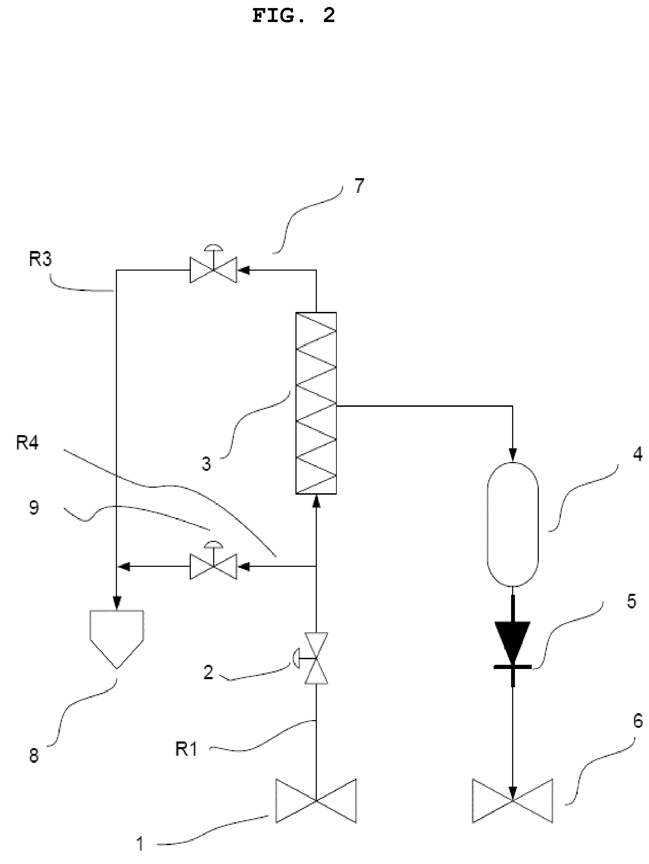

Die **Figur 2** zeigt eine bevorzugte Ausführungsform des in Figur 1 dargestellten erfindungsgemäßen Membranfiltersystems, welches zusätzlich eine Verbindungsleitung R4 aufweist, über welche die Einspeisungsrohrleitung R1 im Bereich zwischen dem Ventil 2 und der Membranfiltereinheit 3 mit der Spülleitung R3 im Bereich zwischen dem Ventil 7 und dem Abfluss 8 verbunden ist. Im Verlauf der Verbindungsleitung R4 ist ein elektrisch betätigbares Ventil 9 angeordnet, welches beim Rückspülen alleine, zusammen oder abwechselnd mit dem Ventil 7 in der Spülleitung R3 geöffnet wird.

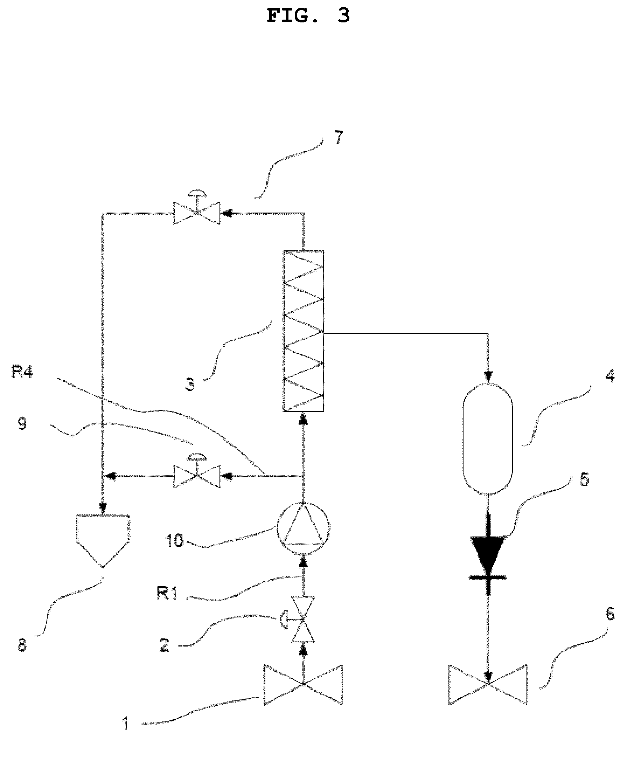

Die **Figur 3** zeigt eine bevorzugte Erweiterung der in Figur 2 dargestellten Ausführungsform des erfindungsgemäßen Membranfiltersystems, bei welcher ein Fördermittel 10 wie z.B. eine Pumpe in der Einspeisungsrohrleitung R1 zwischen dem Ventil 2 und der Membranfiltereinheit 3, vorzugsweise zwischen dem Ventil 2 und dem Abgang der Verbindungsleitung R4 angeordnet ist.

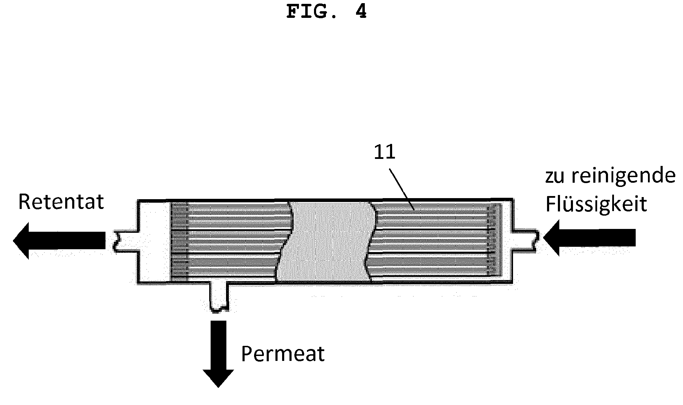

**Figur 4** zeigt eine schematische Darstellung des Aufbaus einer zur Durchführung des erfindungsgemäßen Verfahrens geeigneten Membranfiltereinheit, wie sie im erfindungsgemäßen Membranfiltersystem zur Anwendung kommt, in der Ausgestaltung einer UF-Einheit mit Hohlfasermembranen 11. Wie durch die Pfeile angedeutet, tritt die zu reinigende Flüssigkeit beim gewöhnlichen Filtrieren über die hier nicht dargestellte Einspeisungsrohrleitung in die Membranfiltereinheit 3 ein, passiert die Hohlfasermembranen 11 und verlässt die Membranfiltereinheit auf ihrer Reinseite als Permeat. Bei der Durchführung einer Vorwärts- oder Rückwärtsspülung wird das im Filtermedium zurückgehaltene Retentat mit der Spülflüssigkeit aus der Membranfiltereinheit in Richtung eines Abflusses herausgespült.

### Bezugszeichenliste

- 1: Einspeisestelle; Einspeisungsstelle
- 2: Elektrisch betätigbares Ventil; Ventil
- 3: Membranfiltereinheit; MF/UF-Einheit; Membranfilteranlage
- 4: Membranausgleichsgefäß
- 5: Rückflussverhinderer; Systemtrenner
- 6: Entnahmestelle; Zapfstelle
- 7: Spülventil; Ventil
- 8: Abfluss; Entsorgungsabfluss; Einrichtung zur Aufnahme oder Weiterleitung einer Spülflüssigkeit (mit Retentat)
- 9: Ventil
- 10: Fördermittel; Pumpe
- 11: Hohlfasermembranen
- R1: Einspeisungsrohrleitung; Rohrleitung zur Einspeisung
- R2: Permeatleitung; Rohrleitung zum Transport des Permeats; Rohrleitung zum Transport einer gereinigten, filtrierten Flüssigkeit
- R3: Spülleitung; Retentatleitung; Entsorgungsleitung
- R4: Verbindungsleitung; Rohrleitungsabschnitt
- S: Strömungsrichtung
- RS: Strömungsrichtung beim Rückspülen (Rückwärtsspülen)
- VS: Strömungsrichtung beim Spülen (vorwärts/rückwärts)

## Patentansprüche

1. Verfahren zur Rückspülung oder Rückwärtsspülung einer druckgetriebenen Membranfiltereinheit (3) als Komponente eines Membranfiltersystems, umfassend
- eine Membranfiltereinheit (3),
- eine Rohrleitung zur Einspeisung (R1) einer zu filtrierenden Rohflüssigkeit in das System,
- eine Spülleitung (R3) zur Abführung einer mit Retentat angereicherten Spülflüssigkeit aus der Membranfiltereinheit (3) mit einem Spülventil (7), welches zwischen einem Spülabgang der Membranfiltereinheit (3) und einer Einrichtung zur Aufnahme oder Weiterleitung der Spülflüssigkeit (8) angeordnet ist,
- eine Rohrleitung zum Transport einer gereinigten, filtrierten Flüssigkeit (R2) von der Membranfiltereinheit (3) zu einer Entnahmestelle (6) mit einem Rückflussverhinderer oder Systemtrenner (5), welcher zwischen einem Ausgang der Membranfiltereinheit (3) und der Entnahmestelle (6) angeordnet ist, und
- ein Membranausgleichsgefäß (4), welches in der Rohrleitung zum Transport einer gereinigten, filtrierten Flüssigkeit (R2) zwischen der Membranfiltereinheit (3) und dem Rückflussverhinderer oder Systemtrenner (5) angeordnet ist,
wobei die Rückspülung oder Rückwärtsspülung der Membranfiltereinheit (3) erfolgt, indem das Ventil (2) geschlossen, der Rückflussverhinderer oder Systemtrenner (5) aktiviert und das Spülventil (7) geöffnet werden, sodass ein im Membranausgleichsgefäß (4) unter Druck bereitgestelltes Volumen einer bereits durch die Membranfiltereinheit (3) gereinigten, filtrierten Flüssigkeit in einer Strömungsrichtung (RS) durch die Membranfiltereinheit (3) in die Spülleitung (R3) geleitet wird.

2. Verfahren nach Anspruch 1, wobei das Membranfiltersystem zusätzlich eine Verbindungsleitung (R4) aufweist, über welche die Einspeisungsrohrleitung (R1) im Bereich zwischen dem Ventil (2) und der Membranfiltereinheit (3) mit der Spülleitung (R3) im Bereich zwischen dem Spülventil (7) und der Einrichtung zur Aufnahme oder Weiterleitung der Spülflüssigkeit (8) verbunden ist, und welche ein Ventil (9) aufweist, und wobei die Rückspülung oder Rückwärtsspülung der Membranfiltereinheit (3) unter Aktivierung des Rückflussverhinderers oder Systemtrenners (5) erfolgt, indem das Ventil (2) geschlossen und das Spülventil (7) und/oder das Ventil (9) geöffnet werden, sodass das im Membranausgleichsgefäß (4) unter Druck bereitgestellte Flüssigkeitsvolumen in Strömungsrichtung (RS) durch die Membranfiltereinheit (3) über die Spülleitung (R3) und/oder über die Verbindungsleitung (R4) und die Spülleitung (R3) zur Einrichtung zur Aufnahme oder Weiterleitung der Spülflüssigkeit (8) geleitet wird.

3. Verfahren nach Anspruch 1 oder 2, wobei das Membranfiltersystem im Verlauf der Einspeisungsrohrleitung (R1) zwischen dem Ventil (2) und der Membranfiltereinheit (3) ein Fördermittel (10) aufweist, mit Hilfe dessen die Strömung der Spülflüssigkeit durch die Membranfiltereinheit (3) unterstützt oder beschleunigt wird.

4. Druckgetriebenes Membranfiltersystem zum Filtrieren einer Flüssigkeit, umfassend die folgenden Komponenten:
- eine Membranfiltereinheit (3),
- eine Rohrleitung zur Einspeisung (R1) einer zu filtrierenden Rohflüssigkeit in das System,
- eine Spülleitung (R3) zur Abführung einer mit Retentat angereicherten Spülflüssigkeit aus der Membranfiltereinheit (3) mit einem Spülventil (7), welches zwischen einem Spülabgang der Membranfiltereinheit (3) und einer Einrichtung zur Aufnahme oder Weiterleitung der Spülflüssigkeit (8) angeordnet ist,
- eine Rohrleitung zum Transport einer gereinigten, filtrierten Flüssigkeit (R2) von der Membranfiltereinheit (3) zu einer Entnahmestelle (6) mit einem Rückflussverhinderer oder Systemtrenner (5), welcher zwischen einem Ausgang der Membranfiltereinheit (3) und der Entnahmestelle (6) angeordnet ist, und
- ein Membranausgleichsgefäß (4), welches in der Rohrleitung zum Transport einer gereinigten, filtrierten Flüssigkeit (R2) zwischen der Membranfiltereinheit (3) und dem Rückflussverhinderer oder Systemtrenner (5) angeordnet ist.

5. Druckgetriebenes Membranfiltersystem nach Anspruch 4, ferner umfassend eine Verbindungsleitung (R4), über welche die Einspeisungsrohrleitung (R1) im Bereich zwischen dem Ventil (2) und der Membranfiltereinheit (3) mit der Spülleitung (R3) im Bereich zwischen dem Spülventil (7) und der Einrichtung zur Aufnahme oder Weiterleitung der Spülflüssigkeit (8) verbunden ist.

6. Druckgetriebenes Membranfiltersystem nach Anspruch 4 oder 5, ferner umfassend ein Fördermittel (10), welches im Verlauf der Einspeisungsrohrleitung (R1) zwischen dem Ventil (2) und der Membranfiltereinheit (3) angeordnet ist.
